# EUROPEAN PATENT APPLICATION

(11) **EP 4 822 469 A1**
(43) Date of publication of application: **14.10.2026**
(21) Application number: 25169970.8
(22) Date of filing: 11.04.2025
(51) Int. Cl.: G05B 19/418, G06N 5/022

(54) **SYSTEM AND COMPUTER-IMPLEMENTED METHOD FOR PROVIDING DATA OF A TECHNICAL SYSTEM FOR CONTROLLING THE TECHNICAL SYSTEM BY MEANS OF A LARGE-LANGUAGE-MODEL**

(71) Applicant: Siemens Aktiengesellschaft, 80333 München (DE)
(72) Inventor: Jayaram, Deepak, 81379 Munich (DE); Pizzamiglio, Giacomo, 80339 München (DE); Regnath, Emanuel, 82211 Herrsching (DE)
(74) Representative: Siemens Patent Attorneys

(57) **Abstract**

The invention relates to a system (100) for providing digital twin data of a technical system (TS) for controlling the technical system (TS) by means of a large-language-model (LLM), the system comprising:
- an input unit (101) that is configured to read in digital twin data (DT) of the technical system (TS), wherein the digital twin data (DT) represent physical assets of the technical system and their interconnections,
- a first processing unit (102) that is configured to provide the digital twin data in a graph structure (GDT),
- a second processing unit (103) that is configured to transform the digital twin data from the graph structure (GDT) into a vector structure (VDT),
- an output unit (104) that is configured to provide the digital twin data provided in the vector structure (VDT) as context information for a large-language-model (LLM) for controlling the technical system.

## Description

The present invention relates to a system and a computer-implemented method for providing data of a technical system for controlling the technical system by means of a large-language-model, as well as a computer program product.

For a technical system like a smart factory a digital twin (DT) represents physical assets and their interconnections in a digital format that may have a complex and interlinked structure. Furthermore, a digital twin is continuously updated to represent a current configuration of the respective technical system, i.e., the digital twin is an evolving data structure. Control of the technical system may be based on the digital twin data. It is possible to use machine learning (ML) or Generative Al (GenAl) models to process the digital twin data. However, existing ML and Generative Al (GenAl) models usually do not have a standardized or efficient way to use such evolving, interlinked structure as context. This contextual awareness is particularly vital in applications involving large-language-models (LLMs), for example as industrial copilots that must adapt their outputs based on the specific configurations and real-time state of the respective factory. To this end, the ML models require contextual awareness to generate tailored insights to the specific industrial setting; e.g., the topology of the smart factory needs to be provided in a format that is usable by the LLM. Hence, an efficient, real-time method for embedding the complex and dynamic topology of smart factories into ML pipelines is required.

Traditional methods for context embedding, such as those used in general-purpose LLMs, are designed for static or relatively simple context information and are inadequate for representing the complex data of digital twins. The problem of embedding operational context for Al models, especially in complex environments like Industry 4.0, has traditionally been approached through embedding models. These models are representations of structured or unstructured data, such as text documents or files, which are then input into advanced models like Large Language Models (LLMs) to provide contextual responses. This method works well for static or relatively simple data, enabling Al models to make sense of contextual information by embedding it in a form that can be interpreted and used by downstream models.

However, in the context of Industry 4.0, where digital twins mirror complex, interrelated industrial assets and processes with evolving data, this traditional approach faces limitations. Embedding models are not built to handle the scale, complexity, and dynamism of interconnected DTs. When applied to these environments, embedding models struggle with several issues, like data volume and complexity, dynamic topology, and/or computational overhead.

It is therefore an objective of the present invention to enable efficient usage of digital twin data with a large-language-model.

The object is solved by the features of the independent claims. The dependent claims contain further developments of the invention.

The invention provides according to the first aspect a system for providing data of a technical system for controlling the technical system by means of a large-language-model, the system comprising:
- an input unit that is configured to read in digital twin data of the technical system, wherein the digital twin data represent physical assets of the technical system and their interconnections,
- a first processing unit that is configured to provide the digital twin data in a graph structure,
- a second processing unit that is configured to transform the digital twin data from the graph structure into a vector structure,
- an output unit that is configured to provide the digital twin data provided in the vector structure as context information for a large-language-model for controlling the technical system.

"Digital twin data" refers to a comprehensive set of data that digitally represents a physical asset, technical system, and/or process. A technical system may be for example a (smart) factory. Digital Twin data comprise sensor data, virtual sensor data and/or simulation data. This data comprises for example information about the asset's geometry, materials, sensors, performance characteristics, operating conditions, and any other relevant parameters. In particular, the digital twin data provide the topology of a complex technical system, as it comprises the interconnections of physical parts of the technical system. The digital twin data are usually continuously updated, preferably in real-time or near real-time to mirror changes in the physical counterpart. A digital twin of a physical system, e.g., a production system or factory, enables detailed monitoring, analysis, and optimization of the physical asset throughout its lifecycle.

It is an advantage of the present invention to provide digital twin data of a complex technical system for use as context information with an LLM. In particular, the system can continuously monitor and update the topology of the technical system, representing the digital twin data in a graph structure that dynamically reflects real-time changes in asset relationships, configurations, and/or statuses. Furthermore, the system provides higher efficiency in high-volume distributed data processing, as the graph representation and subsequent vectorized storage streamlines the storage and/or retrieval of the digital twin data, allowing ML pipelines to query real-time data without triggering continuous recalculations. The graph structure also optimizes the handling of high-frequency updates in the DT by only recalculating affected parts, rather than the entire dataset.

According to a preferred embodiment the system further may comprise a vector storage unit that is configured to store the digital twin data provided in the vector structure.

A vector storage is more efficient for data retrieval. It allows for example streamlined data access, enabling real-time responses to ML pipeline queries about the current or specific state of the smart factory's layout and state. Furthermore, storing the digital twin data in vector structure in the vector storage and retrieving it from there, improves data security, as only the stored vector data and not the real data are directly accessed.

According to another embodiment the system may further comprise a selection unit that is configured to select a part of the digital twin data based on a given selection criterion and wherein the first processing unit is configured to provide only said part of the digital twin data in a graph structure.

The system can hence be designed to offer scalable and flexible access to both the complete topology and specific sub-graphs. Using the vectorized representation derived from the sub-graph, the system can isolate and serve sub-graphs tailored to the requirements of ML pipelines or industrial applications.

According to another embodiment the system may further comprise a control unit that is configured to control the technical system by means of a large-language-model and applying the digital twin data provided in the vector structure as context information for the large-language-model.

The control unit may allow to control the technical system using control instructions as prompts provided in natural language to the LLM.

According to another embodiment the digital twin data may comprise real-time data of the technical system.

According to another embodiment the graph structure may be a directed acyclic graph (DAG).

According to another embodiment the input unit may be further configured to read in the digital twin data in defined time intervals.

According to another embodiment the input unit may be further configured to read in the digital twin data on an event basis.

According to a second aspect, the invention provides a computer-implemented method for providing data of a technical system for controlling the technical system by means of a large-language-model, the method comprising:
- reading in digital twin data of the technical system, wherein the digital twin data represent physical assets of the technical system and their interconnections,
- providing the digital twin data in a graph structure,
- transforming the digital twin data from the graph structure into a vector structure,
   and
- providing the digital twin data in the vector structure as context information for a large-language-model for controlling the technical system.

In addition, a computer program product (non-transitory computer readable storage medium having instructions, which when executed by a processor, performs actions) having program instructions for performing the aforementioned method according to embodiments of the invention is claimed.

The invention will be explained in more detail by reference to the accompanying figures.
- FIG. 1:: shows an exemplary embodiment of a system for providing data of a technical system for controlling the technical system by means of a large-language-model; and
- FIG. 2:: shows an exemplary embodiment of a computer-implemented method for providing data of a technical system for controlling the technical system by means of a large-language-model.

Equivalent parts in the different figures are labeled with the same reference signs.

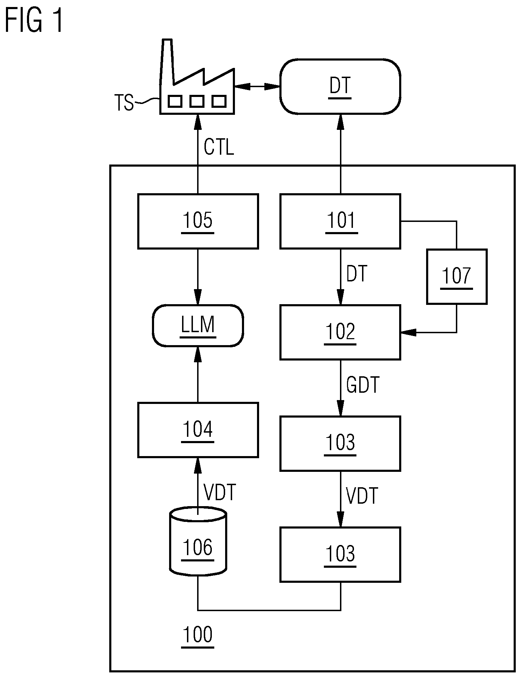

Figure 1 shows an exemplary embodiment of a system 100 for providing data, in particular digital twin data, of a technical system TS for controlling the technical system by means of a large-language-model LLM. The technical system TS may be for example a smart factory.

The system 100 may be understood as a data provider for providing digital twin data in order to use it as context information for a large-language-model LLM, to for example create an industrial co-pilot. The system 100 may be designed to continuously generate, update, and/or serve vectorial representations of the smart factory digital twin network topology. The system 100 therefore enables integrating real-time and granular industrial context into the LLM.

The system 100 comprises an input unit 101, a first processing unit 102, a second processing unit 103, and an output unit 104. The system 100 may further comprise at least one processor. Furthermore, the system 100 may further comprise a control unit 105, a vector storage unit 106 and/or a selection unit 107. Each of these units preferably operates together to enable dynamic, real-time topology extraction and representation, ensuring that a LLM pipelines receive up-to-date and context-aware information with minimal computational overhead.

The input unit 101 is configured to read in digital twin data DT of a digital twin of the technical system TS. The digital twin data DT represent physical assets of the technical system and their interconnections. The digital twin data DT may comprise real-time data of the technical system TS.

The input unit 101 preferably directly interfaces with the smart factory instances, gathering real-time data from the interconnected network of digital twin. The input unit 101 continuously monitors the relationships and states according to the digital twin data DT.

The input unit 101 is further configured to read in the digital twin data DT in defined time intervals and/or on an event basis. For example, monitoring data provided by a physical or virtual sensor may be provided in defined time intervals. A status information about a system component may be provided depending on a status request.

The digital twin data DT are provided to the first processing unit 102. The first processing unit 102 is configured to provide the digital twin data DT in a graph structure GDT. To this end, the first processing unit 102 constructs a graph, preferably a directed acyclic graph (DAG), that dynamically represents the topology of the smart factory, i.e., interconnections and/or dependencies of parts/physical assets/components of the smart factory. This DAG may serve as the foundational structure that captures the topology and real-time context of the smart factory, including any updates and/or changes.

The second processing unit 103 is configured to transform the digital twin data DT from the graph structure GDT into a vector structure VDT or any other format that can be directly processed by an LLM.

The second processing unit 103 therefore interprets the graph data GDT generated by the first processing unit 102, translating the graph structure into a vector form VDT. The vector presentation enables for example efficient storage and/or retrieval of the factory's topology, embedding both the overall graph and any specific sub-graph as needed.

The selection unit 107 is configured to select a part of the digital twin data DT based on a given selection criterion and wherein the first processing unit 102 is configured to provide only said part of the digital twin data in a graph structure GDT. For example, the selection criterion may be related to a subset of the smart factory. Then, only the relevant digital twin data may be selected and further processed. Therefore, the system 100 may support sub-graph mappings, providing for example a granular view within the larger topology, such as specific sections of the factory relevant to a given query or task.

The digital twin data provided in the vector structure VDT may be stored in the vector storage unit 106. The vector storage unit 106 may serve as a centralized repository for the vector representations of the digital twin data VDT generated by the second processing unit 103. The vector storage unit 106 may store the complete topology as well as any related metadata of the digital twin data that may be necessary for interpreting sub-graphs, supporting efficient storage and/or retrieval operations.

The output unit 104 is configured to provide the digital twin data provided in the vector structure VDT as context information for the large-language-model LLM for controlling the technical system TS. The LLM may be part of the system 100 or may be connected via an interface.

The output unit 104 may be understood as an application programming interface (API) that acts as the primary interface through which external components of ML pipelines/a LLM-system can query the digital twin data provided by the system 100.

The control unit 105 is configured to control the technical system by means of a large-language-model LLM and applying the digital twin data provided in the vector structure VDT as context information for the large-language-model LLM. For example, the control unit 105 may be connected to the output unit 104 to request digital twin data VDT provided in vector structure to use it as context for an LLM application to generate control commands CTL for controlling the technical system TS. For example, by specifying a relevant prompt, a user can request either the entire topology or specific sub-graphs, depending on the context required. This flexibility supports a range of industrial applications, from high-level factory monitoring to detailed process-specific analyses. Furthermore, the API 104 can ensure that external systems have consistent, up-to-date access to the factory's state without requiring continuous direct observation, reducing the computational load on the ML pipeline.

For example, it is possible to integrate the system 100 into a Retrieval-Augmented Generation (RAG) architecture supporting an industrial copilot application. For example, the RAG pipeline serves as a retrieval mechanism, combining structured data and unstructured data to generate contextually enriched responses from an LLM. The system 100 provides the digital twin data DT to achieve industrial context awareness. The vector representation of the digital twin data VDT can be queried by the RAG pipeline, e.g., when contextual data is required. The system 100 design allows to maintain an independently updated digital representation of the smart factory, separate from the ML pipeline's internal mechanisms. This ensures that the data provided to the ML components is current, minimizing the need for manual or computationally expensive updates or recalibration within the pipeline.

For example, a user interested in a specific production line status can trigger a request to the system 100, which then returns the relevant sub-graph or full topology that can then be provided as input to the LLM. The LLM can then incorporate this vectorial data, ensuring that the answer reflects the latest state of the factory.

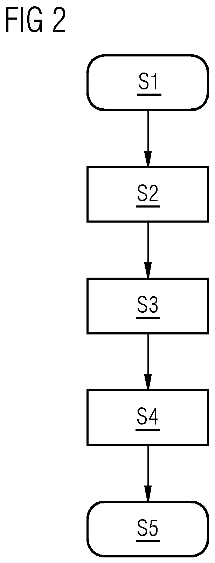

Figure 2 shows an exemplary embodiment of a computer-implemented method for providing data of a technical system for controlling the technical system by means of a large-language-model.

The method comprises the following method steps:
In a first step S1 the digital twin data of the technical system are read in, wherein the digital twin data represent physical assets of the technical system and their interconnections.

In a next step S2 the digital twin data are provided in a graph structure, e.g., as directed acyclic graph.

In a next step S3 the digital twin data are transformed from the graph structure into a vector structure.

In a next step S4 the digital twin data provided in the vector structure are output to use these data as context information for a large-language-model for controlling the technical system.

In a next step S5 the technical system can be controlled by means of an output of the large-language-model using the provided vector digital twin data as context information.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (100) for providing data of a technical system (TS) for controlling the technical system (TS) by means of a large-language-model (LLM), the system comprising:
- an input unit (101) that is configured to read in digital twin data (DT) of the technical system (TS), wherein the digital twin data (DT) represent physical assets of the technical system and their interconnections,
- a first processing unit (102) that is configured to provide the digital twin data in a graph structure (GDT),
- a second processing unit (103) that is configured to transform the digital twin data from the graph structure (GDT) into a vector structure (VDT),
- an output unit (104) that is configured to provide the digital twin data provided in the vector structure (VDT) as context information for a large-language-model (LLM) for controlling the technical system.

2. System (100) according to claim 1, further comprising a vector storage unit (106) that is configured to store the digital twin data provided in the vector structure (VDT).

3. System (100) according to one of the preceding claims, further comprising a selection unit (107) that is configured to select a part of the digital twin data based on a given selection criterion and wherein the first processing unit is configured to provide only said part of the digital twin data in a graph structure.

4. System (100) according to one of the preceding claims further comprising a control unit (105) that is configured to control the technical system by means of a large-language-model and applying the digital twin data provided in the vector structure as context information for the large-language-model.

5. System (100) according to one of the preceding claims, wherein the digital twin data (DT) comprise real-time data of the technical system.

6. System (100) according to one of the preceding claims, wherein the graph structure is a directed acyclic graph.

7. System (100) according to one of the preceding claims, wherein the input unit (101) is further configured to read in the digital twin data (DT) in defined time intervals.

8. System (100) according to one of the preceding claims, wherein the input unit (101) is further configured to read in the digital twin data (DT) on an event basis.

9. Computer-implemented method for providing data of a technical system for controlling the technical system by means of a large-language-model, the method comprising:
- reading (S1) in digital twin data of the technical system, wherein the digital twin data represent physical assets of the technical system and their interconnections,
- providing (S2) the digital twin data in a graph structure,
- transforming (S3) the digital twin data from the graph structure into a vector structure,
and
- providing (S4) the digital twin data in the vector structure as context information for a large-language-model for controlling the technical system.

10. Computer program product directly loadable into the internal memory of a digital computer, comprising software code portions for performing the method steps of claim 9 when said computer program product is run on the computer.
